# FASCICULE DE BREVET EUROPEEN

(11) **EP 0 482 982 B1**
(45) Date de publication et mention de la délivrance du brevet: **09.03.1994**
(21) Numéro de dépôt: 91402779.2
(22) Date de dépôt: 18.10.1991
(51) Int. Cl.: B23B 51/06, B23B 51/08

(54) **Dispositif de perçage à évacuation de copeaux perfectionnée**
Vorrichtung zum Bohren mit verbesserter Späneabfuhr
Device for drilling with improved chip removal

(30) Priorité: 22.10.1990 FR 9013054
(43) Date de publication de la demande: 29.04.1992
(73) Titulaire: AEROSPATIALE Société Nationale Industrielle, 75781 Paris Cédex 16 (FR)
(72) Inventeur: Martin, Guy Elie, F-31170 Tournefeuille (FR)
(74) Mandataire: Bonnetat, Christian

(56) Documents cités:
- DE-A- 1 602 761
- DE-A- 2 649 323
- DE-U- 7 826 701
- GB-A- 936 411
- GB-A- 1 020 516
- US-A- 2 237 901

## Description

La présente invention concerne un dispositif de perçage, tel que foret ou alésoir, comportant au moins deux goujures hélicoïdales autour de l'axe dudit outil, selon le preambule de la revendication 1, voir GB-A-1020516.

Quoique non exclusivement, la présente invention est particulièrement adaptée aux alésoirs à tête fraisurée, destinés à la réalisation des alésages nécessaires pour la mise en place des moyens de fixation permettant le jonctionnement entre une aile d'avion et la structure de celui-ci.

On sait que, pour permettre l'évacuation des copeaux, les outils de perçage existant comportent des goujures très prononcées. De ce fait, leur section comporte relativement peu de matière, de sorte qu'ils ne présentent pas toujours une rigidité aussi grande que souhaitée. De plus, malgré de telles goujures prononcées, l'évacuation des copeaux est malgré tout difficile, de sorte qu'un outil fonctionnant correctement de haut vers le bas, peut ne pas donner satisfaction lorsqu'il fonctionne du bas vers le haut. Ainsi, un outil destiné, dans l'application précédente, à la réalisation d'alésages dans un extrados, ne pourra fonctionner correctement lorsqu'il est utilisé pour réaliser des alésages dans un intrados.

La présente invention a pour objet de remédier à ces inconvénients. Elle concerne un dispositif de perçage de grande rigidité et permettant une évacuation correcte des copeaux.

Cet objet est obtenu par un dispositif selon la revendication 1.

Ledit outil est relié, soit à une source de lubrifiant, soit à une source d'un gaz comprimé, de sorte que l'on peut assurer, à la fois, une bonne lubrification de l'outil et une bonne évacuation des copeaux. Du fait que lesdits conduits sont inclinés vers la pointe de l'outil, ils assurent un effet optimal de dégagement des copeaux. Ainsi, le dispositif selon l'invention peut être utilisé soit vers le bas, soit vers le haut.

On remarquera de plus que, à cause de l'inclinaison desdits conduits, la lubrification peut se faire correctement avec un seul trou par goujure. Il en résulte que la consommation de lubrifiant est modérée.

De préférence, l'axe de chaque conduit fait un angle approximativement égal à 45° avec l'axe dudit outil et dudit canal.

De préférence également, les orifices par lesquels les conduits débouchent dans les goujures sont répartis le long dudit outil. Ainsi, on répartit au mieux le lubrifiant le long de l'outil, ce qui conduit également à une économie dudit lubrifiant.

Selon une caractéristique importante de la présente invention, ledit circuit d'alimentation en fluide sous pression comporte deux voies aboutissant à un dispositif de sélection permettant d'adresser audit outil l'un ou l'autre des fluides circulant dans lesdites voies. Ainsi, l'une desdites voies du circuit d'alimentation peut véhiculer un fluide lubrifiant sous pression pour l'outil, par exemple un courant d'un mélange d'air et d'huile, tandis que l'autre desdites voies véhicule un fluide de soufflage de copeaux, par exemple de l'air comprimé.

Le fluide de soufflage des copeaux a une pression supérieure à celle du fluide de lubrification, une vanne d'arrêt commandable est montée sur la voie véhiculant ledit fluide de soufflage de copeaux et ledit dispositif de sélection laisse passer vers ledit outil celui des deux fluides exerçant à l'entrée dudit dispositif de sélection la pression la plus élevée.

Ainsi, tant que ladite vanne est ouverte, c'est le fluide chargé de dégager les copeaux qui est introduit dans le canal et lesdits conduits inclinés. En revanche, dès que la vanne d'arrêt est fermée, le dispositif de sélection laisse passer le fluide de lubrification. On remarquera qu'un tel dispositif est particulièrement économe en lubrifiant et permet de chasser efficacement les copeaux.

Les figures du dessin annexé feront bien comprendre comment l'invention peut être réalisée. Sur ces figures, des références identiques désignent des éléments semblables.

La figure 1 montre une ébauche pour un alésoir à tête fraisurée conforme à la présente invention.

La figure 2 est une vue selon la ligne II-II de la figure 1.

La figure 3 montre l'alésoir à tête fraisurée conforme à la présente invention, obtenu à partir de l'ébauche de la figure 1.

La figure 4 montre, en vue agrandie, une section de l'alésoir de la figure 3.

La figure 5 donne le schéma synoptique d'un exemple de réalisation du dispositif de perçage selon l'invention.

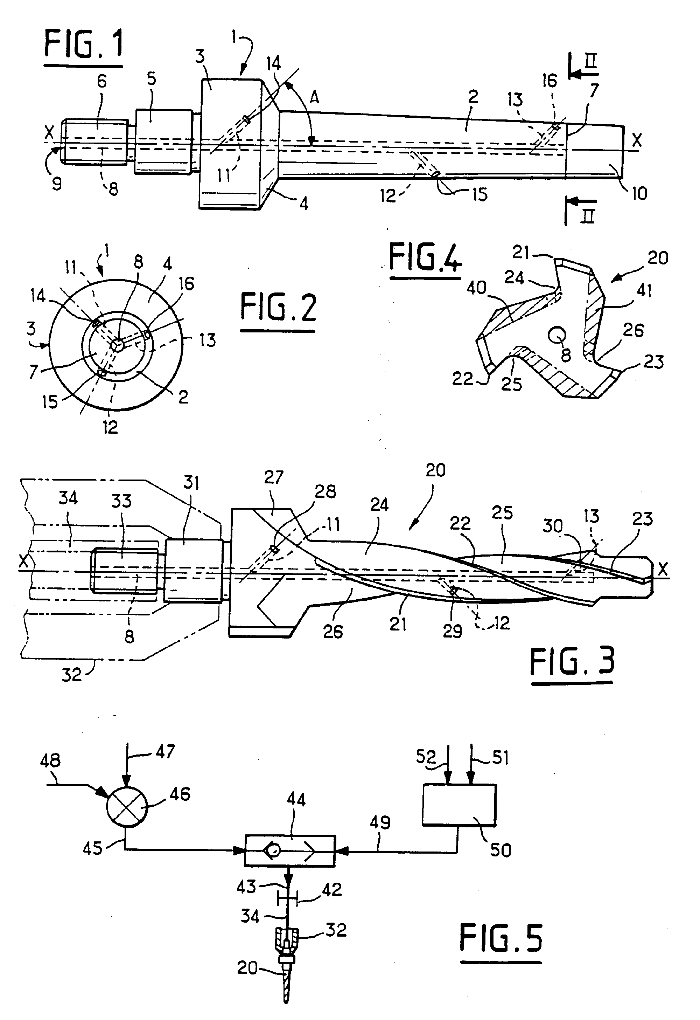

L'ébauche 1 d'alésoir à tête fraisurée montré par la figure 1 comporte une tige conique 2, reliée du côté de plus grand diamètre à une partie cylindrique 3, par l'intermédiaire d'un épaulement conique 4. Du côté opposé à la tige 2, la partie cylindrique 3 est reliée à un noyau 5, lui-même en position intermédiaire entre la partie cylindrique 3 et un noyau fileté 6.

L'ébauche 1 présente une forme de révolution autour d'un axe longitudinal X-X.

De son extrémité 6 à l'extrémité 7 de petit diamètre de la tige 2, l'ébauche 1 est percée d'un canal axial 8. Ce canal axial 8 débouche à l'extérieur de l'ébauche 1 par un orifice 9 prévu dans l'extrémité libre du noyau fileté 6. En revanche, du côté de la petite extrémité 7 de la tige conique 2, l'ébauche comporte une partie rapportée 10 obturant ledit canal axial 8. Par ailleurs, des conduits 11, 12 et 13, inclinés vers l'extrémité 7 et la pièce rapportée 10, relient le canal axial 8 à la paroi extérieure conique de la tige 2. Les conduits 11, 12 et 13 sont tels que leur axe forme un angle A, au moins approximativement égal à 45°, avec l'axe X-X. Ils débouchent sur la paroi extérieure conique de la tige conique 2 par des orifices portant respectivement les références 14, 15 et 16.

Comme cela est montré par les figures 1 et 2, les conduits 11, 12 et 13 sont répartis sur la longueur de la tige conique 2, ainsi qu'autour de l'axe X-X.

L'ébauche 1 représentée par les figures 1 et 2 est destinée à servir à la réalisation de l'outil 20 à trois arêtes coupantes 21, 22 et 23 et à trois goujures 24, 25 et 26. C'est pour cela que le nombre des conduits 11 à 13 est égal à trois.

L'alésoir 20 montré par la figure 3 est réalisé de façon usuelle à partir de l'ébauche 1, de façon à former, en plus des arêtes coupantes 21 à 23 et des goujures 24 à 26, une tête fraisurée 27 dans la partie cylindrique 3 et l'épaulement conique 4. Sur la figure 3, on a représenté que, après réalisation de l'outil 20, les conduits 11, 12 et 13 débouchaient respectivement dans les goujures 24, 26 et 25 par l'intermédiaire d'orifices 28 à 30 résultant de l'intersection desdits conduits par la surface desdites goujures.

Comme on peut le voir, le noyau 5 sert de tête d'entraînement en rotation 31 pour l'alésoir 20, cette tête 31 pouvant être serrée dans un mandrin de préhension 32, lui-même solidaire en rotation de moyens moteurs (non représentés).

Enfin, le noyau fileté 6 sert de raccord 33 à une conduite 34 pour fluide sous pression.

Comme on peut le voir sur la section de la figure 4, la section de l'outil 20 est massive, conférant à celui-ci une grande rigidité.

En effet, comme cela sera expliqué ci-après, les conduits 11, 12 et 13 servent à alimenter l'alésoir en fluide de lubrification, d'une part, et en fluide de dégagement de copeaux, d'autre part, de sorte que le fonctionnement de l'alésoir est optimisé et qu'il n'y a pas à prévoir des goujures particulièrement profondes pour faciliter l'évacuation des copeaux. A titre indicatif, sur la figure 4, on a représenté, en traits mixtes, le contour usuel 40 des alésoirs connus à trois arêtes de coupe. Comme on peut le voir, par rapport à ces outils connus, la section de l'alésoir conforme à la présente invention comporte, en plus, les zones périphériques 41.

Comme cela est représenté sur la figure 5, la conduite 34 reliée au canal axial 8 par l'intermédiaire du raccord 33 est réunie par un système de joint tournant 42 à la sortie 43 d'un dispositif de sélection de circuit 44.

A l'une de ses entrées 45, le dispositif de sélection 44 est relié à une vanne d'arrêt 46, disposée sur une conduite 47 véhiculant un courant d'air sous pression, par exemple à six bars. La vanne d'arrêt 46 est commandable par un organe 48.

Sur son autre entrée 49, le dispositif de sélection 44 reçoit d'un mélangeur 50 un mélange d'huile de lubrification et d'air sous pression qui lui sont respectivement adressés par les conduites 51 et 52. Le courant de produit fluide de lubrification arrivant à l'entrée 49 du dispositif de sélection 44 est par exemple à une pression de 2 bars.

Le dispositif de sélection 44 est sensible à la pression et laisse passer à sa sortie 43 celui des deux courants gazeux apparaissant aux entrées 45 et 49 qui a la pression la plus élevée.

Ainsi, lorsque la vanne 46 est ouverte, le courant d'air provenant de la conduite 47 est introduit dans le canal 8 et sort de l'outil 20 par les orifices 28 à 30. Dans ce cas, l'entrée 49 est obturée. En revanche, lorsque par action sur la commande 48, la vanne 46 est fermée, c'est le courant de fluide de lubrification arrivant par l'entrée 49 qui alimente l'alésoir 20.

On voit ainsi que, par commande de l'organe 48 de la vanne 46, il est possible, en cours de travail de l'outil 20, d'alimenter celui-ci alternativement soit avec un courant gazeux à forte pression susceptible d'éliminer les copeaux par soufflage, soit avec un courant de fluide de lubrification. En fonction du travail, il est donc possible d'optimiser les conditions de fonctionnement de l'outil 20 en adaptant les temps d'ouverture et de fermeture de la vanne 46.

## Revendications

1. Dispositif de perçage, comportant :
- un outil de perçage (20), tel qu'un foret ou un alésoir, pourvu d'au moins deux goujures (24 à 26) hélicoïdales autour de l'axe dudit outil, ledit outil (20) comportant un canal axial (8) débouchant à l'extrémité (6) dudit outil prévue pour la fixation de celui-ci sur lesdits moyens d'entraînement en rotation;
- des moyens (32) d'entraînement en rotation dudit outil ;
- un circuit (44 à 52) d'alimentation en fluide sous pression ; et
- des moyens de liaison (33, 34) permettant de relier ledit outil, du côté de ladite extrémité de fixation, audit circuit d'alimentation en fluide sous pression,
caractérisé en ce que :
- ledit outil comporte une pluralité de conduits (11 à 13) reliant ledit canal axial au fond de chaque goujure, chaque conduit débouchant dans la goujure correspondante par un orifice (14 à 16) et étant incliné vers l'extrémité libre dudit outil, opposée à ladite extrémité de fixation ;
- ledit circuit d'alimentation en fluide sous pression comporte deux voies aboutissant à un dispositif de sélection (44) permettant d'adresser audit outil l'un ou l'autre des fluides circulant dans lesdites voies ;
- en ce que l'une desdites voies véhicule un courant d'un fluide de lubrification pour l'outil, tandis que l'autre desdites voies véhicule un fluide de soufflage de copeaux ;
- en ce que le fluide de soufflage de copeaux a une pression supérieure à celle du fluide de lubrification ;
- en ce qu'une vanne d'arrêt commandable est montée sur la voie véhiculant ledit fluide de soufflage de copeaux ; et
- en ce que ledit dispositif de sélection laisse passer vers ledit outil celui des deux fluides exerçant à l'entré dudit dispositif de sélection la pression la plus élevée.

2. Dispositif de perçage selon la revendication 1,
caractérisé en ce que l'axe de chaque conduit (11 à 13) fait un angle approximativement égal à 45° avec l'axe (X-X) dudit outil et dudit canal.

3. Dispositif de perçage selon l'une des revendications 1 ou 2,
caractérisé en ce que lesdits orifices (14 à 16) sont répartis le long dudit outil.

## Claims

1. Drilling device, including:
- a drilling tool (20), such as a drill bit or a reamer provided with at least two helical flutes (24 to 26) about the axis of the said tool, the said tool (20) including an axial canal (8) opening out at the end (6) of the said tool which is provided for fixing the latter onto the said rotational drive means;
- means (32) for rotationally driving the said tool;
- a circuit (44 to 52) for supplying fluid under pressure; and
- linkage means (33, 34) making it possible to connect the said tool, on the said fixing end side, to the said circuit for supplying fluid under pressure,
characterized in that:
- the said tool includes a plurality of ducts (11 to 13) connecting the said axial canal to the bottom of each flute, each duct opening out into the corresponding flute via an orifice (14 to 16) and being inclined towards the free end of the said tool, opposite the said fixing end;
- the said circuit for supplying fluid under pressure includes two paths ending in a selection device (44) making it possible to send one or other of the fluids circulating in the said paths to the said tool;
- in that one of the said paths conveys a stream of a lubricant fluid for the tool, whereas the other of the said paths conveys a chip-blowing fluid;
- in that the chip-blowing fluid has a pressure which is greater than that of the lubrication fluid;
- in that a controllable shut-off valve is mounted on the path conveying the said chip-blowing fluid; and
- in that the said selection device allows that one of the two fluids exerting the higher pressure at the inlet to the said selection device to pass towards the said tool.

2. Drilling device according to Claim 1, characterized in that the axis of each duct (11 to 13) forms an angle approximately equal to 45° with the axis (X-X) of the said tool and of the said canal.

3. Drilling device according to one of Claims 1 or 2, characterized in that the said orifices (14 to 16) are distributed along the said tool.

## Patentansprüche

1. Bohrvorrichtung, bestehend aus:
- einem Bohrwerkzeug (20), wie zum Beispiel einem Bohrer oder einer Reibahle, ausgestattet mit mindestens zwei Nuten (24 bis 26), die spiralförmig um die Achse des genannten Werkzeugs verlaufen, wobei das genannte Werkzeug (20) einen axialen Kanal (8) aufweist, der am Ende (6) des Werkzeugs mündet, welches für die Befestigung auf den genannten Drehantriebsvorrichtungen vorgesehen ist;
- Drehantriebsvorrichtungen (32) des genannten Werkzeugs;
- ein Speisesystem (44 bis 52) für die Zufuhr unter Druck stehender Fluide; und
- Verbindungsvorrichtungen (33, 34), die eine Verbindung des genannten Werkzeugs auf der Seite des Befestigungsendes mit dem genannten Speisesystem für unter Druck stehende Fluide ermöglichen, dadurch gekennzeichnet, daß:
- das genannte Werkzeug aus einer Vielzahl von Leitungen (11 bis 13) besteht, die den genannten axialen Kanal mit dem Inneren jeder Nut verbinden, wobei jede Leitung in eine Öffnung (14 bis 16) in der entsprechenden Nut mündet und zum freien Ende des Werkzeugs, gegenüber dem Befestigungsende geneigt ist;
- das genannte Speisesystem für ein unter Druck stehendes Fluid aus zwei Kanälen besteht, die in einer Wahlvorrichtung (44) zusammenlaufen, welche die Zuführung des einen oder des anderen der in den genannten Kanälen geführten Fluide ermöglicht;
- einer der Kanäle ein Schmiermittel für das Werkzeug führt, während der andere der Kanäle ein Fluid zum Abblasen von spänen führt;
- das Fluid zum Abblasen von Spänen einen höheren Druck aufweist als der des Schmiermittelfluids;
- ein steuerbarer Absperrschieber auf den Kanal montiert ist, der das Fluid zum Abblasen von Spänen führt; und
- die genannte Wahlvorrichtung dem Werkzeug dasjenige der beiden Fluide zuführt, welches am Eingang der genannten Wahlvorrichtung den höheren Druck ausübt.

2. Bohrvorrichtung nach Patentanspruch 1,
dadurch gekennzeichnet, daß die Achse jeder Leitung (11 bis 13) mit der Achse (X-X) des genannten Werkzeugs und des genannten Kanals einen Winkel von ca. 45° beschreibt.

3. Bohrvorrichtung nach einem der Patentansprüche 1 oder 2,
gekennzeichnet dadurch, daß die genannten Öffnungen (14 bis 16) längs des genannten Werkzeugs verteilt sind.
